# EUROPÄISCHE PATENTSCHRIFT

(11) **EP 2 291 293 B1**
(45) Veröffentlichungstag und Bekanntmachung des Hinweises auf die Patenterteilung: **19.08.2015**
(21) Anmeldenummer: 09772063.5
(22) Anmeldetag: 04.06.2009
(51) Int. Cl.: B60G 3/14, B60G 7/00, B60G 21/05

(54) **GEGENLENKENDE FAHRZEUG-HINTERACHSE**
COUNTERSTEERING AUTOMOTIVE REAR AXLE
ESSIEU ARRIÈRE DE VÉHICULE À CONTRE-BRAQUAGE

(30) Priorität: 02.07.2008 DE 102008031123
(43) Veröffentlichungstag der Anmeldung: 09.03.2011
(73) Patentinhaber: Bayerische Motoren Werke Aktiengesellschaft, 80809 München (DE)
(72) Erfinder: JAKOB, Benjamin, 80937 München (DE)
(86) Internationale Anmeldenummer: PCT/EP2009/003989
(87) Internationale Veröffentlichungsnummer: WO 2010/000363

(56) Entgegenhaltungen:
- EP-A- 1 561 611
- EP-A- 2 019 023
- DD-A5- 281 154
- DE-A1-102004 050 624
- FR-A- 2 926 248
- JP-A- 2005 119 601

## Beschreibung

Die Erfindung betrifft eine gegenlenkende Fahrzeug-Hinterachse, die unter Einwirkung einer Seitenkraft auf das an einem Radträgers befestigte kurvenäußere Rad eine Drehbewegung dieses Radträgers um eine virtuelle Spreizachse in Richtung Vorspur veranlasst, wobei der Radträger über zumindest ein aus einem Blech geformten Tragteil an einem sich im wesentlichen in Fahrzeug-Längsrichtung erstreckenden Achskörpers abgestützt ist und wobei das Tragteils einen zur Ebene des Radträgers im wesentlichen parallele und in gewissem Maße flexiblen Abschnitt sowie einen sich hieran in Fahrtrichtung betrachtet hinter dem Rad-Mittelpunkt anschließenden und sich im wesentlichen in Fahrzeug-Querrichtung erstreckenden Abschnitt aufweist. Zum bekannten Stand der Technik wird insbesondere auf die Db 281 154 A5 sowie auf die DE 103 21 877 B4 verwiesen.

Es ist bekannt, dass einfache Fahrzeug-Hinterachsen insbesondere der Verbundlenker-Bauart, aber auch der Längslenker- und Schräglenker-Bauart unter Seitenkrafteinfluss eine Übersteuertendenz aufweisen können. Aus dem genannten Stand der Technik sind weiterhin bereits Abhilfemaßnahmen hiergegen bekannt. So zeigt die zweitgenannte DE 103 21 877 B4 eine Radträgerlagerung mit einer sog. Pendelplatte, in der vier elastische Schwenklager integriert sind. Mit dieser äußerst aufwändigen Konstruktion wird das Rad unter Seitenkrafteinfluss in Vorspur gelenkt. Gleiches erfolgt bei einer konstruktiv erheblich einfacheren sog. gegenlenkenden Hinterachse nach der erstgenannten DD 281 154 A5, jedoch dürfte die Betriebsfestigkeit eines dort vorgesehenen plattenförmigen Federelementes, welches den Radträger trägt, zu wünschen übrig lassen.

Vorliegend soll daher eine relativ einfach bauende sog. gegenlenkende Hinterachse nach dem Oberbegriff des Anspruchs 1 aufgezeigt werden, die den allgemeinen Festigkeitsanforderungen von Fahrzeugachsen (beispielsweise für PKW) genügt (=Aufgabe der vorliegenden Erfindung).

Die Lösung dieser Aufgabe ist dadurch gekennzeichnet, dass auch der in einer seitlichen Projektion im wesentlichen gleichermaßen wie die virtuelle Spreizachse gegenüber der Vertikalrichtung geneigte Abschnitt in gewissen Maße flexibel ist, so dass diese beiden Abschnitte über eine die Spreizachse bildende Kante miteinander verbunden und aufgrund ihrer gewissen Flexibilität um diese Kante geringfügig gegeneinander verschwenkbar sind, und dass dieses Tragteil zumindest an den freien Enden eines in seitlicher Projektion näherungsweise U-förmigen Tragblechs abgestützt ist, weiches seinerseits am Achskörper befestigt ist. Vorteilhafte Aus- und Weiterbildungen sind Inhalt der Unteransprüche.

Vorgeschlagen ist somit eine besondere Tragstruktur für den Radträger in Form des hier sogenannten Tragteils, welches einerseits eine ausreichende Steifigkeit und Festigkeit besitzt, um das Rad bzw. den Radträger über der gesamten Lebensdauer des Fahrzeugs hinsichtlich Radsturz exakt führen zu können und welches andererseits einen flexiblen Bereich aufweist, welcher die gewünschte Spreizachse definiert. In diesem Sinne weist das erfindungsgemäße Tragteil im wesentlichen zwei unterschiedliche Ebenen beschreibende Abschnitte auf, die über eine Kante oder dgl. miteinander verbunden sind, um welche diese beiden Abschnitte geringfügig gegeneinander verschwenkbar sind, so das diese Kante zumindest näherungsweise oder teilweise die Spreizachse (auch Lenkachse genannt) bildet. Überspitzt betrachtet sind somit die beiden Abschnitte des Tragteils um diese Kante bzw. um die Spreizachse klappbar, um das gewünschte In-Vorspur-Gehen des Rades unter Seitenkrafteinfluss zu erreichen. Gemäß dem bekannten Stand der Technik muss hierfür die Spreizachse in Seitenansicht betrachtet derart gegenüber der Vertikalen geneigt sein, dass diese die Radaufstandsebene in Fahrtrichtung betrachtet hinter dem Radaufstandspunkt schneidet.

Dieses Tragteil ist zumindest über das besagte Tragblech, welches in Seitenansicht, d.h. in Fahrzeug-Querrichtung betrachtet näherungsweise U-förmig ist, am Achskörper befestigt bzw. abgestützt. Hierzu sind zumindest die freien Enden der beiden Schenkel des Tragblechs, von denen der erste in Vertikalrichtung betrachtet oberhalb des Rad-Mittelpunktes und der zweite unterhalb des Rad-Mittelpunktes liegt, vorzugsweise stoffschlüssig mit dem Tragteil verbunden. Vorzugsweise in seinem mittleren Bereich ist das Tragblech mit dem Achskörper, vorzugsweise mit dessen freien Ende, vorzugsweise stoffschlüssig verbunden. Ein derart gestaltetes Tragteil kann den Betriebsfestigkeitsanforderungen genügen und ist baulich erheblich einfacher als bspw. die aus der eingangs genannten DE 103 21 877 B4 bekannte Anordnung mit vier elastischen Schwenklagern.

Zur Vergrößerung der Steifigkeit des Tragteils mit Ausnahme desjenigen Bereichs desselben, der seitlich der Spreizachse liegt und daher geringfügig verformbar sein soll, kann sich an den zur Ebene des Radträgers im wesentlichen parallelen Abschnitt oberhalb und/oder unterhalb des Rad-Mittelpunkts ein weiterer sich im wesentlichen in Fahrzeug-Querrichtung erstreckender sog. Steg-Abschnitt anschließen, der auch mit dem bereits genannten sich im wesentlichen in Fahrzeug-Querrichtung erstreckenden und wie die Spreizachse gegenüber der Vertikalen geneigten Abschnitt verbunden ist. Dieser Steg-Abschnitt liegt dabei in einer dritten im wesentlichen horizontalen Ebene, während der wie die Spreizachse geneigte weitere Abschnitt eher als vertikal ausgerichtet - wenngleich gegenüber der Vertikalen geneigt - bezeichnet werden kann. Der im wesentlichen parallel zum Radträger ausgerichtete Abschnitt des Tragteils erstreckt sich im wesentlichen in Vertikalrichtung und in Fahrzeug-Längsrichtung.

Mit dem oder den zusätzlichen Steg-Abschnitt(en) erhält das Tragteil quasi die Form eines Helms oder dgl., was auch gut aus den beigefügten und an späterer Stelle erläuterten Figuren eines Ausführungsbeispiels hervorgeht. Ebenfalls zur Vergrößerung der Steifigkeit des Tragteils mit Ausnahme desjenigen Bereichs desselben, der seitlich der Spreizachse liegt und daher geringfügig verformbar sein soll, kann oberhalb des Rad-Mittelpunktes und/oder unterhalb des Rad-Mittelpunktes ein Verstärkungsblech vorgesehen sein, über welches (jeweils) das Tragteil sowie das Tragblech am Achskörper abgestützt sind. Vorzugsweise ist das bzw. jedes Verstärkungblech mit den anderen Bauteilen, nämlich mit dem Achskörper sowie dem Tragteil und dem Tragblech stoffschlüssig verbunden. Vorzugsweise verläuft das dem Tragteil zugewandte Ende des jeweiligen Verstärkungsblechs näherungsweise parallel zur gewünschten Spreizachse, denn deren Verlauf kann, so solche Verstärkungsbleche vorgesehen sind, im wesentlichen durch deren dem Tragteil zugewandte Enden bzw. durch die Übergangsbereiche zwischen den Verstärkungsblechen und dem Tragteil bestimmt Werden.

In diesem Zusammenhang kann von einem zusammenhängenden oberen Abstützbereich des Tragteils, in welchem das obere Verstärkungsblech mit seinem dem Achskörper gegenüberliegenden Ende sowie das Tragblech abgestützt sind, gesprochen werden und in analoger Weise von einem unterer Abstützbereich des Tragteils, in welchem das untere Verstärkungsblech mit seinem dem Achskörper gegenüberliegenden Ende sowie das Tragblech am Tragteil abgestützt sind. Durch diese beiden Abstützbereiche hindurch verläuft die gewünschte virtuelle Spreizachse, denn diese beiden Abstützbereiche selbst sind in sich extrem steif, während deren Umgebung gegenüber diesen beiden Abstützbereichen eine gewisse Flexibilität besitzt. Diese genannte Umgebung, die im wesentlichen einerseits durch den zum Radträger parallelen Abschnitt des Tragteils und andererseits durch den sich im wesentlichen in Fahrzeug-Querrichtung erstreckenden und geringfügig gegenüber der Vertikalen geneigten Abschnitt des Tragteils gebildet wird, kann also gegenüber den genannten Abstützbereichen geringfügig verformt werden, so dass letztlich die gewünschte Verschwenkbarkeit des ersten dieser beiden Abschnitte gegenüber dem zweiten dieser beiden Abschnitte um die durch die beiden Abstützbereiche verlaufende Spreizachse gegeben ist.

Wenn im Sinne einer vorteilhaften Weiterbildung der besagte obere Abstützbereich in Fahrzeug-Querrichtung betrachtet nennenswert näher bei der Mitte des Fahrzeugs oder der Achse liegt als der besagte untere Abstützbereich, verläuft die durch den oberen und den unteren Abstützbereich bestimmte virtuelle Spreizachse in einer Ansicht in Fahrzeug-Längsrichtung derart gegenüber der Vertikalen geneigt, dass ein negativer Lenkrollradius mit seinen dem Fachmann bekannten Vorteilen gebildet sein kann. Insbesondere kann mit einem solchen negativen Lenkrollradius bei. Bremsvorgängen und somit unter Längskrafteinfluss ebenfalls ein gewünschtes In-Vorspur-Gehen des Rades erzeugt werden, d.h. dass das Rad bzw. der Radträger um die virtuelle Spreizachse in Vorspur verschwenkt werden.

Um die gewünschte Flexibilität oder Weichheit im Tragteil erzeugen zu können, kann es im übrigen erforderlich sein, in gewissen Bereichen desselben bzw. in einem oder mehreren Abschnitt(en) desselben bereichsweise eine oder mehrere Aussparung(en) vorzusehen.

Zusätzlich zur bisher erläuterten Abstützung letztlich am Achskörper kann der Radträger direkt oder indirekt über zumindest ein weiteres eine gewisse Weichheit aufweisendes Verbindungselement abseits der Spreizachse abgestützt sein, vorzugsweise abermals am genannten Achskörper. Diese Weichheit erlaubt dem Radträger die gewünschte Verschwenkbewegung um die virtuelle Spreizachse, wobei dieses Verbindungselement auf die Intensität dieser Verschwenkbewegung Einfluss nehmen und diese insbesondere auch bedämpfen kann. Beispielsweise kann als derartiges Verbindungselement ein in axialer Richtung weiches Gummilager zum Einsatz kommen, wobei die axiale Richtung tangential zur Drehrichtung des Radträgers um die virtuelle Spreizachse verläuft. Damit lässt sich also die Verdrehweichheit um die Spreizachse einstellen und somit auch das elastokinematische Vorspurlenkverhalten der Achse. Wie bereits erwähnt kann ein solches eine gewisse Weichheit aufweisendes Verbindungselement insbesondere Torsionsschwingungen um die virtuelle Spreizachse bedämpfen und darüber hinaus das Aufziehen der Achse bei Bremsvorgängen reduzieren. Zusätzlich kann ein derartiges Verbindungselement Kräfte beim Einfedern des Rades übertragen. Vorteilhafterweise kann an dieser Stelle auch die Spureinstellung der Achse durchgeführt werden. Es sei nochmals ausdrücklich darauf hingewiesen, dass als derartiges Verbindungselement nicht zwangsläufig ein Gummilager verwendet werden muss, sondern dass dieses Verbindungselement auch durch ein geeignetes Strukturbauteil gebildet sein kann, welches die besagte "Weichheit" in oben beschriebener Richtung aufweist. Im übrigen kann dieses besagte Verbindungselement vorzugsweise zwischen dem parallel zum Radträger ausgerichteten Abschnitt des Tragteils, welcher hierfür einen geeigneten Fortsatz aufweisen kann, und dem Achskörper vorgesehen sein.

Im weiteren wird die Erfindung anhand eines in den beigefügten Prinzipskizzen dargestellten Ausführungsbeispieles weiter erläutert. Dabei zeigt
- Figur 1: eine räumliche Ansicht einer erfindungsgemäßen Achse bei Betrachtung von schräg links vorne
- Figur 2: den Bereich des linksseitigen Radträgers aus Figur 1 in vergrößerten Darstellung
- Figur 3: eine räumliche Ansicht des Radträgers aus Figur 2 von schräg außen hinten
- Figur 4: die Seitenansicht des Radträgers aus Figur 2
- Figur 5: die Aufsicht von oben auf den Radträger aus Figur 2 inklusive Teilen des Achskörpers
- Figur 6: den Schnitt A-A aus Figur 5

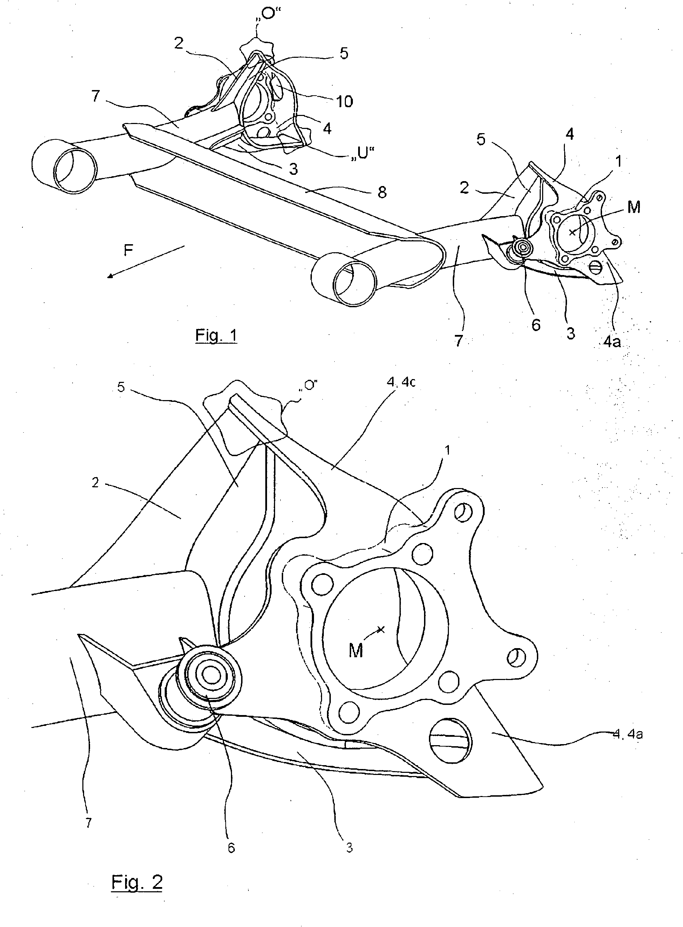

Zunächst auf die Figuren 1 - 3 Bezug nehmend ist mit der Bezugsziffer 1 der Radträger einer Fahrzeug-Hinterachse gekennzeichnet, bei welcher es sich beispielsweise - wie vorliegend dargestellt - um eine dem Fachmann in ihrem Aufbau grundsätzlich bekannte sog. Verbundlenkerachse handeln kann. Diese weist für jedes Rad, d.h. linksseitig und rechtsseitig jeweils einen sich im wesentlichen in Fahrzeug-Längsrichtung (= Fahrtrichtung F in Fig.1) erstreckenden sog. Achskörper 7 (hier in Form eines Längsrohres) auf, wobei beide Achskörper 7 über ein sich in Fahrzeug-Querrichtung erstreckendes biegesteifes aber torsionsweiches Verbundprofil 8 miteinander verbunden sind.

Jeder Radträger 1 ist letztlich an dem ihm zugeordneten Achskörper 7 unter Zwischenschaltung eines aus einem Blech geformten Tragteils 4, welches seinerseits von einem Tragblech 5 sowie von Verstärkungsblechen 2 und 3 getragen wird, abgestützt. Vorliegend ist der Radträger 1, genauer das Tragteil 4 darüber hinaus über ein weiteres Verbindungselement 6 am Achskörper 7 abgestützt, welches jedoch nicht zwingend erforderlich ist.

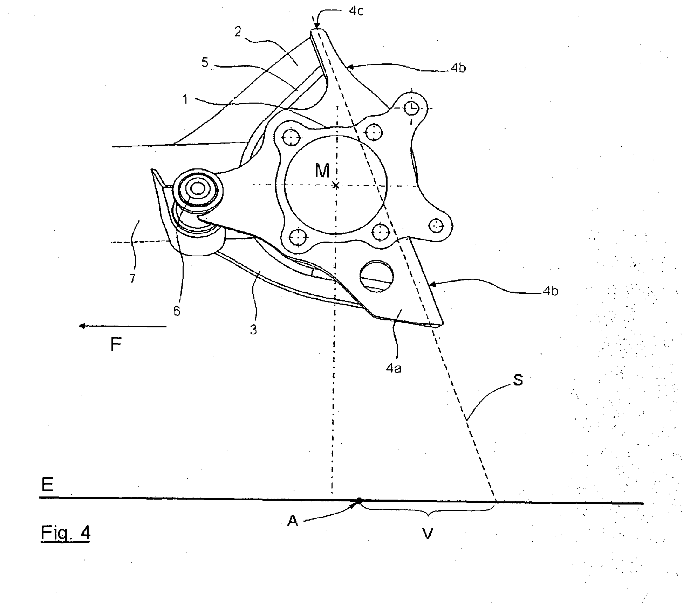

Das Tragteil 4 weist einen zur Ebene des Radträgers 1 im wesentlichen parallelen Abschnitt 4a sowie einen sich hieran in Fahrtrichtung betrachtet hinter dem Rad-Mittelpunkt M anschließenden und sich im wesentlichen in Fahrzeug-Querrichtung erstreckenden Abschnitt 4b auf. Letzterer ist in einer seitlichen Projektion gegenüber der Vertikalrichtung geneigt, wozu auch auf Fig.4 verwiesen wird, in der die beiden Pfeile 4b (oberhalb sowie unterhalb des Rad-Mittelpunktes M) auf den sich senkrecht zur Zeichenebene in Blickrichtung erstreckenden Abschnitt 4b weisen. Gleichzeitig weisen diese beiden Pfeile 4b auf eine (abgerundete) Kante, die sich durch den Übergang des Abschnitts 4a in den Abschnitt 4b des Tragteils 4 ergibt. Die besagte Neigung des Abschnitts 4b gegenüber der Vertikalen, der dennoch als annährend vertikal ausgerichtet bezeichnet werden kann, ist im wesentlichen gleich der Neigung der ebenfalls in dieser Fig.4 dargestellten Spreizachse S, worauf an späterer Stelle noch näher eingegangen wird.

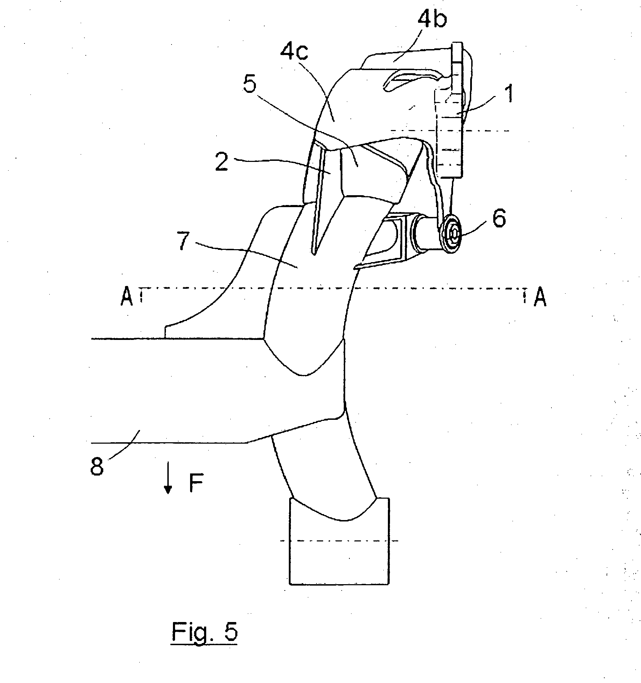

Während der Abschnitt 4a des Tragteils 4 den Radträger 1 quasi umgibt bzw. während der Radträger 1 auf dem Abschnitt 4a angeordnet bzw. von diesem getragen ist, schließt sich an den zur Ebene des Radträgers 1 im wesentlichen parallelen Abschnitt 4a hier lediglich oberhalb des Rad-Mittelpunkts M ein weiterer sich im wesentlichen in Fahrzeug-Querrichtung erstreckender sog. Steg-Abschnitt 4c an, der auch mit dem sich im wesentlichen in Fahrzeug-Querrichtung erstreckenden und näherungsweise vertikal ausgerichteten Abschnitt 4b verbunden ist bzw. in letzteren übergeht, wie auch aus Fig.5 hervorgeht. In Fig.4 ist auf diesen Abschnitt 4c in gleicher Weise wie auf den Abschnitt 4b hingewiesen, nämlich durch einen Pfeil 4c.

Zurückkommend auf das bereits genannte Tragblech 5, über das das Tragteil 4 am Achskörper 7 befestigt ist, handelt es sich hierbei um eine in seitlicher Projektion (vgl. neben Fig.2 und Fig. 4 auch den in Fig. 1 bezüglich der Fahrtrichtung F rechtsseitigen Radträger dieser Achse) näherungsweise U-förmige Struktur. Zumindest die freien Enden der beiden Schenkel dieses Tragblechs 5, von denen der erste in Vertikalrichtung betrachtet oberhalb des Rad-Mittelpunktes M und der zweite unterhalb des Rad-Mittelpunktes M liegt, sind vorzugsweise stoffschlüssig mit dem Tragteil 4 verbunden; vorzugsweise ist dort, wo dies möglich ist, eine solche stoffschlüssige Verbindung auch am Rand der Schenkel des Tragblechs 5 vorgesehen. In seinem mittleren Bereich (und somit im Bereich der "Basis" der U-förmigen Struktur) ist das Tragblech 5 mit dem freien Ende des Achskörpers 8 vorzugsweise stoffschlüssig verbunden. Weiterhin ist zur Vergrößerung der Steifigkeit des Tragteils 4 oberhalb des Rad-Mittelpunktes M und/oder unterhalb des Rad-Mittelpunktes M jeweils ein Verstärkungsblech 2 bzw. 3 vorgesehen, über welches das Tragteil 4 sowie das Tragblech 5 am Achskörper 7 abgestützt sind. Diese geeignet strukturierten Verstärkungsbleche 2 und 3 sind mit ihren freien Enden und/oder seitlichen Abschnitten also sowohl mit dem Achskörper 7 als auch mit dem Tragteil 4 und dem Tragblech 5 vorzugsweise stoffschlüssig verbunden.

Es kann von einem zusammenhängenden oberen Abstützbereich "O" des Tragteils 4, in welchem das obere Verstärkungsblech 2 mit seinem dem Achskörper 7 gegenüberliegenden Ende sowie das Tragblech 5 abgestützt sind, gesprochen werden und in analoger Weise von einem unteren Abstützbereich "U" des Tragteils 4, in welchem das untere Verstärkungsblech 3 mit seinem dem Achskörper 7 gegenüberliegenden Ende sowie das Tragblech 5 abgestützt sind. Durch diese beiden insbesondere in den Figuren 1, 2 und 6 sichtbaren Abstützbereiche "O" und "U" hindurch verläuft die gewünschte virtuelle Spreizachse S, denn diese beiden Abstützbereiche "O" und "U" selbst sind in sich extrem steif, während das Tragteil 4 abseits dieser beiden Abstützbereiche "O" und "U" eine gewisse Flexibilität beisitzt. Diese gegenüber den beiden Abstützbereichen "O" und "U" in gewissen Maße flexiblen Abschnitte 4a mit 4c einerseits sowie 4b andererseits können sich insbesondere solchermaßen verformen, dass diese um eine durch diese beiden Abstützbereiche "O" und "U" hindurch laufende Achse, bei welcher es sich um die gewünschte Spreizachse S handelt, geringfügig gegeneinander verschwenkbar sind, um das gewünschte "In-Vorspur-Gehen" des jeweils kurvenäußeren Rades unter Seitenkraft-Einwirkung herzustellen.

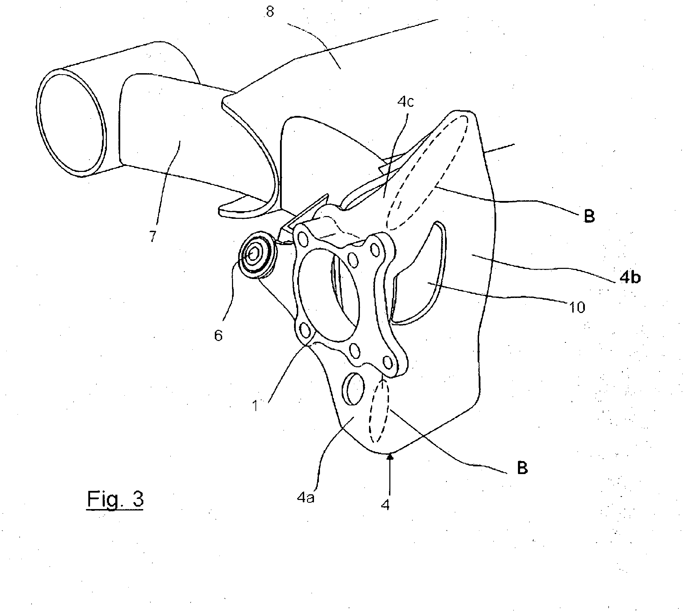

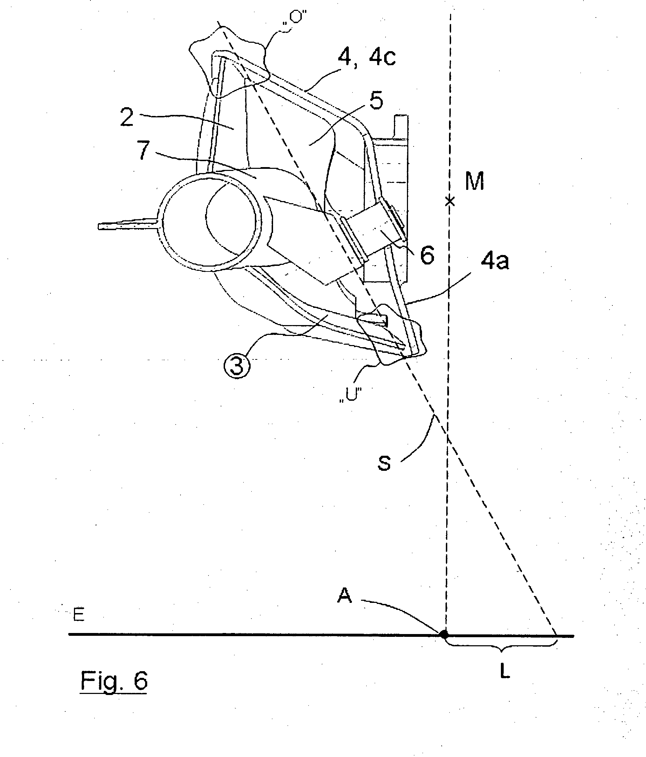

In Figur 3 sind durch gestrichelte Linien begrenzte beigeweiche Bereiche "B" des Tragteils 4 dargestellt, in welchen die im vorhergehenden Absatz genannte Verschwenkbewegung des Abschnitts 4b des Tragteils 4 gegenüber den Abschnitten 4a und 4c des Tragteils 4 um die Spreizachse S erfolgen kann. Diese Spreizachse S selbst ist in den Figuren 4 und 6 dargestellt.

Wie Figur 4, in der die Fahrtrichtung des Fahrzeugs durch einen Pfeil F dargestellt ist, zeigt, wird insbesondere durch die Neigung des sich in Fzg.-Querrichtung erstreckenden Abschnitts 4b des Tragteils 4 gegenüber der Vertikalen die im wesentlichen gleiche Neigung der virtuellen Spreizachse S in dieser seitlichen Projektion bestimmt. Über den Schnittpunkt dieser Spreizachse S mit der Radaufstandsebene E ergibt sich eine Vorlaufstrecke V des Rad-Aufstandspunktes A, welche bei auf das kurvenäußere Rad in dieser Figurendarstellung senkrecht zur Zeichenebene einwirkender Seitenkraft ein Vorspurlenken und somit ein untersteuerndes, stabilisierendes Fahrzeug-Verhalten bewirkt.

Wie Figur 5 zeigt wird auch in Fahrzeug-Längsrichtung betrachtet die virtuelle Spreizachse S im wesentlichen durch den oberen Abstützbereich "O" und den unterer Abstützbereich "U" des Tragteils 4 bestimmt. In dieser Ansicht ist erkennbar, dass aufgrund der gezielten Positionierung dieser beiden Abstützbereiche "O" und "U", nämlich dadurch, dass der obere Abstützbereich "O" in Fahrzeug-Querrichtung betrachtet nennenswert näher bei der (in dieser Figurendarstellung linksseitig liegenden) Mitte des Fahrzeugs oder der Fahrzeug-Achse liegt als der besagte untere Abstützbereich "U", welcher in Fzg.-Querrichtung betrachtet relativ weit außen (und in dieser Figurendarstellung möglichst weit rechtsseitig) liegt, die durch den oberen und den unteren Abstützbereich bestimmte virtuelle Spreizachse S derart gegenüber der Vertikalen geneigt ist, dass ein negativer Lenkrollradius L mit seinen dem Fachmann bekannten Vorteilen gebildet ist.

Wird beispielsweise der untere Abstützbereich "U" bzw. das untere Verstärkungsblech 3 weiter nach außen (in Fig.6 nach rechts) verlängert bzw. verlagert, so wandert auch der untere Spreizachspunkt weiter nach außen und der Lenkrollradius L nimmt in Richtung "negativ" zu, was bei Bremsvorgängen des Fahrzeugs (und somit bei am Rad im Aufstandspunkt angreifenden Längskräften) einen stärkeren untersteuernden Effekt hat. Im übrigen kann auch durch eine Variation der Wandstärken des Tragteils 4 dessen Biegeweichheit um die Spreizachse S und somit der mit einer erfindungsgemäßen Achse erzielbare untersteuernde Effekt verändert werden, falls dies die Betriebsfestigkeitsanforderung zulässt. In diesem Sinne können im Tragteil 4 bzw. in gewissen Bereichen desselben eine oder mehrere Aussparungen vorgesehen sein, so wie dies beim vorliegenden Ausführungsbeispiel in Form der Aussparung 10 im Abschnitt 4b des Tragteils 4 der Fall ist (vgl. insbesondere Fig.3).

In den Figuren erkennt man weiterhin ein bereits kurz angesprochenes weiteres Verbindungselement 6 hier in Form eines Gummilagers, welches in axialer Richtung - diese verläuft in Figur 4 im wesentlichen senkrecht zur Zeichenebene - eine gewisse Weichheit aufweist, und über welches der zum Radträger 1 parallele Abschnitt 4a des Tragteils 4 (und somit indirekt auch der Radträger 1) abseits der virtuellen Spreizachse S zusätzlich am Achskörper 7 abgestützt ist. Mit dieser weichen Abstützung kann die insbesondere unter Seitenkrafteinfluss, in Abhängigkeit vom Lenkrollradius jedoch auch unter Längskrafteinfluss erfolgende Verschwenkbewegung des Radträgers 1 um die Spreizachse S in gewünschter Weise eingestellt und insbesondere auch bedämpft werden. Die weiteren Vorteile eines solchen Verbindungselements 6 wurden vor der Beschreibung dieses Ausführungsbeispiels erläutert.

Eine erfindungsgemäße Hinterachs-Konstruktion eignet sich insbesondere für Verbundlenkerachsen oder Längslenkerachsen oder Schräglenkerachsen oder Starrachsen, bzw. für sämtliche Achsen, welche insbesondere bei Seitenkraft, ggf. auch bei Längskraft ungewollt "in Nachspur gehen". Hauptmerkmal ist, dass durch eine definierte Biegeweichheit des Tragteiles 4 des Radträgers 1, welches selbstverständlich integraler Bestandteil des Radträgers 1 sein kann, so dass der Radträger 1 selbst diese bestimmte Biegeweichheit besitzt, eine virtuelle Spreizachse gebildet ist, deren Schnittpunkt mit der Radaufstandsebene E in Fahrtrichtung F betrachtet hinter dem Radaufstandpunkt liegt (vgl. Fig.4) und vorzugsweise zusätzlich in Fahrzeug-Querrichtung betrachtet außerhalb des Radträgers 1 liegt (vgl. Fig.6), so dass sich eine Vorlaufstrecke V und mit dem zusätzlichen Kriterium vorteilhafterweise ein negativer Lenkrollradius L ergibt. Neben diesen fahrdynamisch positiven Eigenschaften werden im einfachsten Fall keine weiteren Gummilager oder Kugelgelenke benötigt, gegebenenfalls lediglich das hier gezeigte weitere Verbindungselement 6, so dass eine einfache und kostengünstige Achskonstruktion vorliegt, wobei noch darauf hingewiesen sei, dass durchaus eine Vielzahl von Details abweichend von obigen Erläuterungen gestaltet sein kann, ohne den Inhalt der Patentansprüche zu verlassen. Insbesondere sei darauf hingewiesen, dass das Tragblech 5 vorliegend bereits derart geformt ist, dass eine Abtriebswelle in Fzg.-Querrichtung zum Radträger 1 geführt werden kann, so dass eine erfindungsgemäße Hinterachse durchaus auch angetrieben werden kann.

## Patentansprüche

1. Gegenlenkende Fahrzeug-Hinterachse, die unter Einwirkung einer Seitenkraft auf das an einem Radträger (1) befestigte kurvenäußere Rad eine Drehbewegung dieses Radträgers (1) um eine virtuelle Spreizachse (S) in Richtung Vorspur veranlasst, wobei der Radträger (1) über zumindest ein aus einem Blech geformten Tragteil (4) an einem sich im wesentlichen in Fahrzeug-Längsrichtung erstreckenden Achskörper (7) abgestützt ist, und wobei das Tragteil (4) einen zur Ebene des Radträgers im wesentlichen parallelen und in gewissem Maße flexiblen Abschnitt (4a) sowie einen sich hieran in Fahrtrichtung (F) betrachtet hinter dem Rad-Mittelpunkt (M) anschließenden und sich im wesentlichen in Fahrzeug-Querrichtung erstreckenden Abschnitt (4b) aufweist,
**dadurch gekennzeichnet, dass** auch der in einer seitlichen Projektion im wesentlichen gleichermaßen wie die virtuelle Spreizachse (S) gegenüber der Vertikalrichtung geneigte Abschnitt (4b) in gewissen Maße flexibel ist, so dass diese beiden Abschnitte (4a, 4b) über eine die Spreizachse (S) bildende Kante miteinander verbunden und aufgrund ihrer gewissen Flexibilität um diese Kante (S) geringfügig gegeneinander verschwenkbar sind,
und dass dieses Tragteil (4) zumindest an den freien Enden eines in seitlicher Projektion näherungsweise U-förmigen Tragblechs (5) abgestützt ist, welches seinerseits am Achskörper (7) befestigt ist.

2. Fahrzeug-Hinterachse nach Anspruch 1,
**dadurch gekennzeichnet, dass** sich an den zur Ebene des Radträgers (1) im wesentlichen parallelen Abschnitt (4a) oberhalb und/oder unterhalb des Rad-Mittelpunkts (M) ein weiterer sich im wesentlichen in Fahrzeug-Querrichtung erstreckender sog. Steg-Abschnitt (4c) anschließt, der auch mit dem in Anspruch 1 genannten sich im wesentlichen in Fahrzeug-Querrichtung erstreckenden Abschnitt (4b) verbunden ist.

3. Fahrzeug-Hinterachse nach Anspruch 1 oder 2,
**dadurch gekennzeichnet, dass** oberhalb des Rad-Mittelpunktes (M) und/oder unterhalb des Rad-Mittelpunktes (M) ein Verstärkungsblech (2, 3) vorgesehen ist, über welches das Tragteil (4) sowie das Tragblech (5) am Achskörper (7) abgestützt sind.

4. Fahrzeug-Hinterachse nach Anspruch 3,
**dadurch gekennzeichnet, dass** ein zusammenhängender oberer Abstützbereich ("O") des Tragteils (4), in welchem das obere Verstärkungsblech (2) mit seinem dem Achskörper (7) gegenüberliegenden Ende sowie das Tragblech (5) abgestützt sind, in Fahrzeug-Querrichtung betrachtet nennenswert näher bei der Mitte des Fahrzeugs oder der Achse liegt als ein zusammenhängender unterer Abstützbereich ("U") des Tragteils (4), in welchem das untere Verstärkungsblech (3) mit seinem dem Achskörper (7) gegenüberliegenden Ende sowie das Tragblech (5) abgestützt sind, so dass die durch den oberen und den unteren Abstützbereich ("O", "U") verlaufende virtuelle Spreizachse (S) in einer Ansicht in Fahrzeug-Längsrichtung derart gegenüber der Vertikalen geneigt ist, dass ein negativer Lenkrollradius (L) gebildet ist.

5. Fahrzeug-Hinterachse nach einem der vorangegangenen Ansprüche,
**dadurch gekennzeichnet, dass** der Radträger (1), insbesondere der zur Ebene des Radträgers (1) im wesentlichen parallele Abschnitt (4a) des Tragteils (4), abseits der Spreizachse (S) über ein zusätzliches eine gewisse Weichheit aufweisendes Verbindungselement (6) am Achskörper (7) abgestützt ist.

6. Fahrzeug-Hinterachse nach einem der vorangegangenen Ansprüche,
**dadurch gekennzeichnet, dass** in einem Bereich des Tragteils (4) zumindest eine Aussparung (10) vorgesehen ist.

## Claims

1. A counter-steering vehicle rear axle, which causes a rotational movement of this wheel carrier (1) about a virtual spread axis (S) in a tow-in direction under a lateral force influence on the wheel, which is on the outside during cornering and fastened to a wheel carrier (1), wherein the wheel carrier (1) is supported by at least one support part (4) formed from a metal sheet on an axle body (7) extending substantially in the longitudinal direction of the vehicle, and wherein the support part (4) has a portion (4a), which is flexible to a certain extent and substantially parallel to the plane of the wheel carrier, as well as a portion (4b) extending substantially in the transverse direction of the vehicle and adjoining said flexible portion behind the wheel centre point (M), viewed in the direction of travel (F), **characterised in that** the portion (4b), which is inclined in a lateral projection substantially similarly to the virtual spread axis (S) relative to the vertical direction, is also flexible to a certain extent, so these two portions (4a, 4b) are connected to one another by an edge forming the spread axis (S) and, because of their certain flexibility, can be pivoted slightly in relation to one another about this edge (S), and **in that** this support part (4) is supported at least on the free ends of a a support plate (5), which is approximately U-shaped in lateral projection and is in turn fastened to the axle body (7).

2. A vehicle rear axle according to claim 1, **characterised in that** a further so-called web portion (4c), which extends substantially in the transverse direction of the vehicle and is also connected to the portion (4b) which is mentioned in claim 1 and extends substantially in the transverse direction of the vehicle, adjoins the portion (4a), which is substantially parallel to the plane of the wheel carrier (1), above and/or below the wheel centre point (M).

3. A vehicle rear axle according to claim 1 or 2, **characterised in that** a reinforcement plate (2, 3), by means of which the support part (4) and the support plate (5) are supported on the axle body (7), is provided above the wheel centre point (M) and/or below the wheel centre point (M).

4. A vehicle rear axle according to claim 3, **characterised in that** a continuous upper support region ("O") of the support part (4), in which the upper reinforcement plate (2) with its end opposing the axle body (7) as well as the support plate (5) are supported, viewed in the transverse direction of the vehicle, is located significantly closer to the centre of the vehicle or the axle than a continuous lower support region ("U") of the support part (4), in which the lower reinforcement plate (3) with its end opposing the axle body (7) as well as the support plate (5) are supported, so the virtual spread axis (S) running through the upper and the lower support region ("O", "U"), in a view in the longitudinal direction of the vehicle, is inclined in relation to the vertical in such a way that a negative steering roll radius (L) is formed.

5. A vehicle rear axle according to any one of the preceding claims, **characterised in that** the wheel carrier (1), in particular the portion (4a) of the support part (4), which is substantially parallel to the plane of the wheel carrier (1), away from the spread axis (S), is supported on the axle body (7) by an additional connection element (6) having a certain softness.

6. A vehicle rear axle according to any one of the preceding claims, **characterised in that** at least one recess (10) is provided in a region of the support part (4).

## Revendications

1. Essieu arrière de véhicule à contrebraquage qui provoque, sous l'action d'une force latérale exercée sur la roue externe à la trajectoire fixée sur un support de roue (1) un mouvement de rotation de ce support de roue (1) autour d'un axe d'extension virtuel (S) dans la direction du pincements, le support de roue (1) s'appuyant par l'intermédiaire d'au moins un élément porteur (4) conformé à partir d'une tôle sur un corps d'essieu (7) s'étendant essentiellement dans la direction longitudinale du véhicule, et l'élément porteur (4) comportant un segment (4a) essentiellement parallèle au plan du support de roues et flexible dans une mesure donnée, ainsi qu'un segment (4b) raccordé à celui-ci, en arrière du centre (M) de la roue dans la direction de déplacement (F) et s'étendant essentiellement dans la direction transversale du véhicule, **caractérisé en ce que**
le segment (4b) qui est en projection latérale, incliné par rapport à la direction verticale essentiellement de manière similaire à l'axe d'extension virtuel (S) est également flexible dans une mesure donnée, de sorte que ces deux segments (4a, 4b) soient reliés entre eux sur une arête formant l'axe d'extension (S) et soient susceptibles de pivoter dans une faible mesure l'un par rapport à l'autre autour de cette arête (S) du fait de leur flexibilité donnée,
l'élément porteur (4) s'appuie, au moins sur les extrémités libres d'une tôle porteuse (5) essentiellement en forme de U en projection latérale qui est quant à elle fixée sur le corps d'essieu (7).

2. Essieu arrière de véhicule conforme à la revendication 1, **caractérisé en ce qu'**
au segment (4a) essentiellement parallèle au plan du support de roues (1), se raccorde au-dessus et/ou au-dessous du centre (M) de la roue, un autre segment dit segment formant barrette (4c) s'étendant essentiellement dans la direction transversale du véhicule qui est également relié au segment (4b) mentionné dans la revendication 1 s'étendant essentiellement dans la direction transversale du véhicule.

3. Essieu arrière de véhicule conforme à la revendication 1 ou 2, **caractérisé en ce qu'**il est prévu au-dessous du centre (M) de la roue et/ou au-dessous du centre (M) de la roue une tôle de renfort (2, 3) par l'intermédiaire de laquelle l'élément porteur (4) ainsi que la tôle porteuse (5) s'appuient sur le corps d'essieu (7).

4. Essieu arrière de véhicule conforme à la revendication 3, **caractérisé en ce qu'**une zone d'appui supérieure continue (O) de l'élément porteur (4) sur laquelle s'appuient la tôle de renfort supérieure (2) par son extrémité située à l'opposé du corps d'essieu (7) ainsi que la tôle porteuse (5) est dans la direction transversale du véhicule, notablement plus proche du centre du véhicule ou de l'essieu qu'une zone d'appui inférieure continue (U) de l'élément porteur (4) sur laquelle s'appuient la tôle de renfort inférieure (3) par son extrémité située à l'opposée du corps d'essieu (7) ainsi que la tôle porteuse (5), de sorte que l'axe d'extension virtuel (S) passant par la zone d'appui supérieure et par la zone d'appui (O, U) inférieure soit incliné par rapport à la verticale en vue dans la direction longitudinale du véhicule de façon à former un départ au sol négatif (L).

5. Essieu arrière de véhicule conforme à l'une des revendications précédentes, **caractérisé en ce que** le support de roue (1), en particulier le segment (4a) de l'élément porteur (4) essentiellement parallèle au plan du support de roue (1) s'appuie sur le corps d'essieu (7) en dehors de l'axe d'extension (S) par l'intermédiaire d'un élément de liaison supplémentaire (6) présentant une mollesse donnée.

6. Essieu arrière de véhicule conforme à l'une des revendications précédentes, **caractérisé en ce qu'**il est prévu au moins un évidement (10) dans une zone de l'élément porteur (4).
